# EUROPEAN PATENT APPLICATION

(11) **EP 3 591 225 A1**
(43) Date of publication of application: **08.01.2020**
(21) Application number: 19382191.5
(22) Date of filing: 18.03.2019
(51) Int. Cl.: F04B 11/00, F16L 55/054, F15B 1/00

(54) **PULSATION DAMPENER**

(30) Priority: 05.07.2018 ES 201831057 U
(71) Applicant: Carcaré Gimeno, Manuel, 08295 Sant Vicenc de Castellet (ES)
(72) Inventor: Carcaré Gimeno, Manuel, 08295 Sant Vicenc de Castellet (ES)
(74) Representative: Isern Patentes y Marcas S.L.

(57) **Abstract**

A pulsation dampener comprising a tubular element (8) configured to enable the passage of a flow of fluid associated to the hydraulic circuit, the tubular element (8) being provided with a first fluid medium which acts as a damping medium, wherein the tubular element (8) includes coupling means for joining to the hydraulic circuit. Said pulsation dampener includes a hydro-pneumatic accumulator (5) which has a primary chamber (22) defined by an expandable separator means (1), said primary chamber (22) being envisaged for housing a gas which acts as a second damping medium, such that the first fluid medium is contained in a first intermediate chamber (17) located in the tubular element (8) and in a second intermediate chamber (18) located in the hydro-pneumatic accumulator (5), the first and second chambers being in fluid communication, the tubular element (8) including a flexible rubber tube (9) on the inside configured to increase or reduce the volume of the second intermediate chamber (18).

## Description

### OBJECT OF THE INVENTION

The object of the present application is to register a pulsation dampener for the application thereof in the technical field of hydraulics.

More specifically, the invention proposes the development of a pulsation dampener, in particular for the pulsations that are generated in a hydraulic circuit due to the variations in instantaneous flow and pressure, in dosing and/or volumetric pumps used in the industry in general.

### BACKGROUND OF THE INVENTION

The arrangement is known of dampeners of pulsations generated in a hydraulic circuit, essentially due to instant variations in flow and pressure produced during the operation of dosing and/or volumetric pumps.

A gas is used in these dampeners which acts as a damping medium which is housed in the outer portion of a rubber tube through which the pumped liquid circulates.

Moreover, dampeners in line with the current art use a single tube made of rubber or a material similar to the ones used in peristaltic pumps, these tubes are able to be compressed or flattened by the effect of the pressure of the gas acting on the outside thereof, but they are very limited in diametric dilation due to a textile braid existing inside of said tubes.

This textile braid is necessary in the current models since it serves to prevent an excessive flattening that would block off the inlet of the flow of the pump and would produce a water hammer effect when the pump is started, an effect contrary to the one desired. Therefore, the pre-charge pressure or initial swelling of the gas remains limited, and in this manner, the damping effect that is to be achieved is reduced.

Furthermore, the applicant does not currently know of an invention that has all the characteristics described in this specification.

### DESCRIPTION OF THE INVENTION

The present invention has been developed with the aim of providing a pulsation dampener which is configured as a novelty within the field of application and solves the previously mentioned drawbacks, also contributing other additional advantages that will be obvious from the description below.

Therefore, the object of the present invention is to provide a pulsation dampener, envisaged to make up part of a hydraulic circuit, of the type comprising a tubular element configured to enable the passage of a flow of fluid associated to the hydraulic circuit, the tubular element being provided with a first fluid medium which acts as a damping medium, wherein the tubular element includes coupling means for joining to the hydraulic circuit. In particular, the invention is characterised in that it includes a hydro-pneumatic accumulator which has a primary chamber defined by an expandable separator means, said primary chamber being envisaged for housing a gas which acts as a second damping medium, such that the first fluid medium is contained in a first intermediate chamber located in the tubular element and in a second intermediate chamber located in the hydro-pneumatic accumulator, the first and second chambers being in fluid communication through a passage conduit, wherein the tubular element includes a flexible rubber tube on the inside configured to increase or reduce the volume of the second intermediate chamber.

The function of the liquid enclosed in the chambers is that of transferring the variations in pressure and volume from the hydraulic circuit driven by a pump to the hydro-pneumatic accumulator.

The cross section of the rubber tube through which a flow of the hydraulic circuit circulates, resulting when more or less liquid is introduced into the chamber present in the tubular element, can be regulated as convenient in each application, but at no time does the rubber tube close the circulation cross section of the flow of the circuit in its entirety since it can be controlled with the amount of liquid introduced into the chamber for the liquid present in the tubular element.

Another aspect of the dampener of the invention, the pulsation dampener has an additional rubber tube concentric to the rubber tube, such that an intermediate chamber is defined between the two rubber tubes which is able to modify the inner volume thereof.

This prevents leakage of the damping gas unlike what can happen with dampeners of the prior art. In these, when the gas is in direct contact with the outer surface of a single rubber tube through the inside of which the flow of the hydraulic circuit circulates, when it breaks, all the gas is lost being mixed with the liquid of the circuit.

By means of this arrangement of a double tube made of flexible rubber, in the case that the rubber tube which is in contact with the liquid of the circuit breaks from wear or friction, the damping gas present in the chamber inside the separator means, such as for example, a rubber bladder, is not lost.

Advantageously, the dampener comprises evacuation means communicating the chamber between tubes and the outside of the tubular element.

Preferably, said evacuation means can comprise at least one hole which is in communication with the outside of the tubular element.

Advantageously, the evacuation means can be linked to a pressure switch linked to a control unit, which enables possible leakage of the liquid pumped by the breakage of the rubber tube to be detected. This signal, detected by the pressure switch when the pressure of the circulating liquid coming from the pump is received, enables a warning about the breakage of the flexible rubber tube to be given.

Also advantageously, each of the two ends of the rubber tube has a ringshaped protuberance projecting radially towards the outside.

Similarly, each of the ends of the additional rubber tube has a ringshaped protuberance projecting radially towards the outside.

Preferably, the coupling means consist of a threaded portion situated on at least one of the ends of the tubular element.

According to another aspect of the invention, the tubular element and the hydro-pneumatic accumulator are joined by means of an adapter element.

Preferably, the previously mentioned expandable separator means can be an elastic cup-shaped rubber bladder, elastic membrane or an elastic bellow.

Other characteristics and advantages of the pulsation dampener object of the present invention will be evident in light of the description of a preferred, but not exclusive, embodiment which is illustrated by way of non-limiting example in the drawings which are attached, in which:

### BRIEF DESCRIPTION OF THE DRAWINGS

Figure 1.- Is a partial cross section of an elevation view of the pulsation dampener according to the invention in a resting condition;
Figure 2.- Is a partial cross section of an elevation view of the pulsation dampener of the invention in a first operating condition; and
Figure 3.- Is a partial cross section of an elevation view of the pulsation dampener of the invention in a second operating condition.

### DESCRIPTION OF A PREFERRED EMBODIMENT

In light of the aforementioned figures, and in accordance with the adopted numbering, one may observe therein an example of a preferred embodiment of the invention, which comprises the parts and elements indicated and described in detail below.

As seen in the figures, the pulsation dampener, envisaged for being assembled in-line in a hydraulic circuit, comprises a tubular element (8) made from metal material containing a liquid housed in a first intermediate chamber (17). This first intermediate chamber (17) is formed by the inner volume of the metal tubular element (8) and the outer diameter of a rubber tube (9). This first intermediate chamber (17) contains a liquid which is compatible with the liquid coming from the pump generating the pulsation and which enters through the end (20) of the tubular element (8) and comes out of the other end (21).

The liquid contained by the first intermediate chamber (17) also fills a passage conduit (19) and a chamber (18) inside the body of a hydro-pneumatic accumulator (5). The hydro-pneumatic accumulator, which is joined to the tubular element (8) by means of an adapter element (7), contains in the inside thereof a separator element (1) between the liquid of the chamber (18) and the gas, usually Nitrogen (N₂) or another similar gas inside the primary chamber (22).

The hydro-pneumatic accumulator (5) incorporates an adapter (4) in the upper portion thereof which in turn incorporates a filling valve (3) to fill the inside of the bladder and a manometer (6) with gas.

In the embodiment shown in the figures, this separator element (1) between both fluids has been shown with a cup-shaped rubber bladder, which can also be a membrane, elastic bellow (not shown). The tubular element (8) houses in the inside thereof two rubber tubes (9, 10) which are elastic and concentric to each other. A hole (29) is also provided envisaged to perform the filling and emptying of the liquid fluid contained inside the intermediate chambers (17, 18). Once the intermediate chambers (17, 18) are filled, the hole (29) is closed by means of the cap (32).

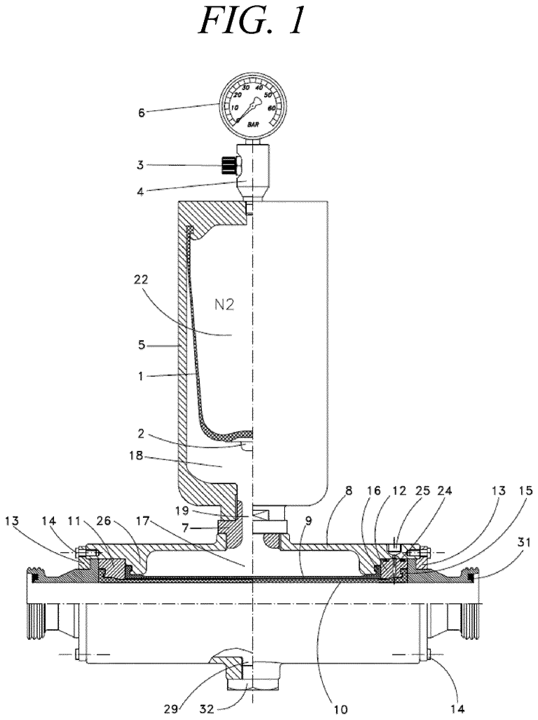

Figure 1 shows the cross section of the dampener of the invention arranged for the operation thereof. Inside the tubular element (8), the rubber tubes (9, 10) are seen.

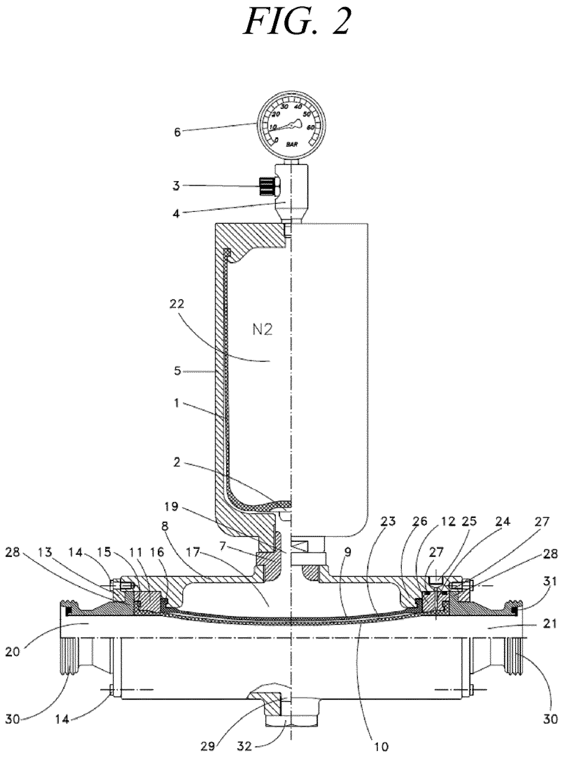

Figure 2 shows that these same rubber tubes (9, 10) are partially flattened, that is, with a slight curvature with respect to a longitudinal axis of the tubular element (8).

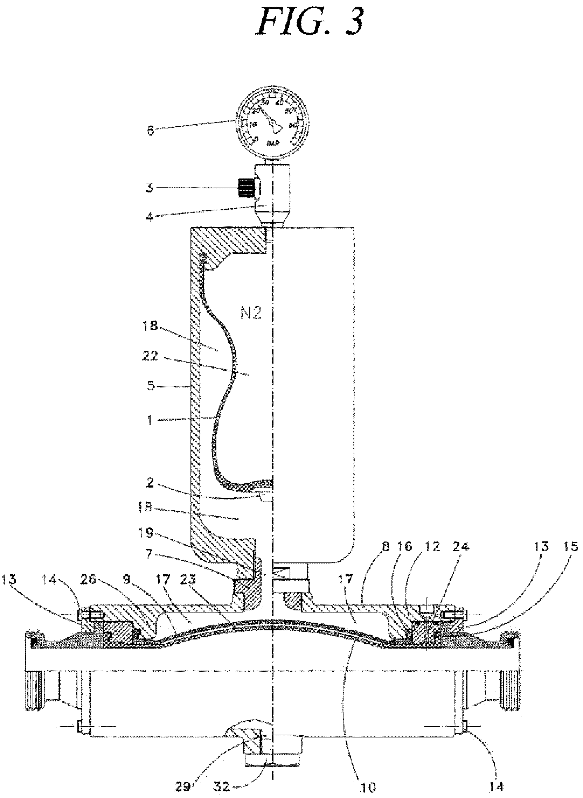

Figure 3 shows that the two rubber tubes (9, 10) are stretched diametrically by the effect of the excess in volume generated by the pump, supplying the maximum flow. The pulsation dampener operates between the two positions of the rubber tubes (9, 10) which are concentric and coaxial with the tubular element (8) of the dampener according to figures 2 and 3.

The volume of intermediate liquid enclosed in the intermediate chambers (17, 18) and passage conduit (19) is a constant volume previously introduced through the aforementioned hole (29). In Figure 2, all this liquid is in the first intermediate chamber (17) and passage conduit (19), while in figure 3, a large part of this liquid is housed in the chamber (18) present inside the hydro-pneumatic accumulator (5).

The liquid driven by the pump circulates through the inside of the rubber tube (10), indistinctly entering through the end (20) and coming out through the other end (21). All the flow supplied by the pump of the hydraulic circuit circulates through the inside of the rubber tube (10). This rubber tube (10) is housed inside the other rubber tube (9). Both rubber tubes (9, 10) have on the ends thereof protuberances (15, 16) the purpose of which is to create the seal and prevent the outlet or leakage to the outside of the liquid pumped by the pump and of the liquid enclosed in the intermediate chambers (17, 18).

This is achieved by the tightening force exerted by screws (14) on flanges (13) and these in turn on rings (11, 12) through protrusions (28) which make up part of the threaded portions (30) envisaged to couple the tubular element (8) to a hydraulic circuit, and which compress the protuberances (15, 16) of the ends of the two rubber tubes (9, 10), on internal supports (26) located on each end of the tubular element (8) of the dampener.

It should be mentioned that the threaded portions can be substituted by means of flanges or another type of suitable join, wherein a sealing gasket (31) is incorporated.

Between the rubber tubes (9, 10) there is an intermediate chamber (23), which enables, in the case of the rubber tube (10) breaking due to friction or wear caused by the liquid supplied by the pump of the hydraulic circuit (not shown), an amount of the pumped liquid to be introduced which passes to the hole (25) through the through hole (24) located in a ring (12). This hole (25) is in the tubular element (8). The ring (12) incorporates two sealing gaskets (27).

It is worth mentioning that there is the possibility that a pressure switch or an equivalent apparatus is connected in the hole (25), which will detect the leakage of the pumped liquid by the breakage of the rubber tube (10). This signal, detected by the pressure switch when the pressure of the circulating liquid proceeding from the pump is received, enables a warning about the breakage of the flexible rubber tube (10) to be given. As there exists the second rubber tube (9), the liquid of the hydraulic circuit is not mixed with the liquid enclosed in the intermediate chambers (17, 18) and consequently there is no possibility of the pumped liquid being contaminated by the contact with the liquid enclosed in the intermediate chambers (17, 18).

These variations in pressure and volume are absorbed by compressing and dilating the gas inside the primary chamber (22) of the rubber bladder (1), (it incorporates a metal anti-extrusion button (2)) and this brings with it the elimination of the pressure peaks which are generated in the hydraulic circuit caused by the variations in instantaneous speeds of the gasket or membranes of the dosing or volumetric pumps.

The details, shapes, dimensions and other accessory elements, used to manufacture the pulsation dampener of the invention, may be suitably substituted for others which do not depart from the scope defined by the claims which are included below.

## Claims

1. A pulsation dampener, envisaged to make up part of a hydraulic circuit, comprising a tubular element (8) configured to enable the passage of a flow of fluid associated to the hydraulic circuit, the tubular element being provided with a first fluid medium which acts as a damping medium, wherein the tubular element (8) includes coupling means for joining to the hydraulic circuit, **characterised in that** it includes a hydro-pneumatic accumulator (5) which has a primary chamber (22) defined by an expandable separator means, said primary chamber (22) being envisaged for housing a gas which acts as a second damping medium, such that the first fluid medium is contained in a first intermediate chamber (17) located in the tubular element (8) and in a second intermediate chamber (18) located in the hydro-pneumatic accumulator (5), the first and second chambers being in fluid communication through a passage conduit (19), wherein the tubular element includes on the inside a flexible rubber tube (9) configured to increase or reduce the volume of the second intermediate chamber.

2. The pulsation dampener according to claim 1, **characterised in that** it has an additional rubber tube (10) concentric to the rubber tube, such that an intermediate chamber (23) is defined between the two rubber tubes (9, 10) which is able to modify the inner volume thereof.

3. The pulsation dampener according to any of the preceding claims, **characterised in that** it comprises evacuation means communicating the chamber between rubber tubes (9, 10) and the outside of the tubular element (8).

4. The pulsation dampener according to claim 3, **characterised in that** the evacuation means comprise at least one through hole (24) which is in communication with the outside of the tubular element (8).

5. The pulsation dampener according to claim 4, **characterised in that** the through hole (24) is located in a ring (12) which is linked to the two rubber tubes (9, 10).

6. The pulsation dampener according to claim 3, **characterised in that** the evacuation means are linked to a pressure switch linked to a control unit.

7. The pulsation dampener according to any of the preceding claims, **characterised in that** each of the two ends of the rubber tube (9, 10) has a ringshaped protuberance which juts out radially towards the outside.

8. The pulsation dampener according to any of the preceding claims, **characterised in that** each of the ends of the additional rubber tube has a ringshaped protuberance which projects radially towards the outside.

9. The pulsation dampener according to any of the preceding claims, **characterised in that** the coupling means consist of a threaded portion located on at least one of the ends of the tubular element (8).

10. The pulsation dampener according to any of the preceding claims, **characterised in that** the tubular element and the hydro-pneumatic accumulator (5) are joined by means of an adapter element (7).

11. The pulsation dampener according to claim 1, **characterised in that** the expandable separator means is a cup-shaped elastic bladder.

12. The pulsation dampener according to claim 1, **characterised in that** the expandable separator means is an elastic bellow.

13. The pulsation dampener according to claim 1, **characterised in that** the expandable separator means is an elastic membrane.
